# FASCICULE DE BREVET EUROPEEN

(11) **EP 2 160 002 B1**
(45) Date de publication et mention de la délivrance du brevet: **09.11.2016**
(21) Numéro de dépôt: 09168798.8
(22) Date de dépôt: 27.08.2009
(51) Int. Cl.: H04M 1/725

(54) **Procédé d'échange de données entre deux entités électroniques**
Verfahren zum Datenaustausch zwischen zwei elektronischen Geräten
Method for exchanging data between two electronic entities

(30) Priorité: 28.08.2008 FR 0855770
(43) Date de publication de la demande: 03.03.2010
(73) Titulaire: Oberthur Technologies, 92300 Levallois-Perret (FR)
(72) Inventeur: Bertin, Marc, 78720 La Celle les Bordes (FR)
(74) Mandataire: Santarelli

(56) Documents cités:
- EP-A- 1 347 623
- EP-A- 1 705 899
- WO-A-2006/115842
- WO-A-2007/121791
- WO-A2-2007/125223
- US-A1- 2004 152 457
- US-A1- 2004 171 375
- US-A1- 2004 203 944
- ANONYMOUS: "Public Key Infrastructureand Applications", INTERNET CITATION, 6 September 2004 (2004-09-06), pages 1-6, XP002534271, Retrieved from the Internet: URL:http://netsec.iseca.org/materials/pres entations/PKI_Applications.ppt [retrieved on 2009-06-25]
- ANONYMOUS: "Index of /materials/presentations", INTERNET CITATION, 6 September 2004 (2004-09-06), page 1, XP002534272, Retrieved from the Internet: URL:http://netsec.iseca.org/materials/pres entations/ [retrieved on 2009-06-25]

## Description

La présente invention concerne un procédé d'échange de données entre deux entités électroniques.

Dans le cadre de l'échange de données entre deux entités électroniques (ces données pouvant être représentées sous forme de signaux électriques au sein de ces entités électroniques, par exemple au sein de mémoires portées par ces entités électroniques), il a notamment été proposé de mettre en oeuvre des communications à courte portée (ou communications en champ proche si l'on traduit littéralement l'expression *"Near Field Communication"* utilisée sous forme abrégée NFC), comme décrit dans la demande de brevet WO 2007/121 791. On entend en général par courte portée une portée inférieure à 1 m, par exemple une portée de l'ordre de 50 cm, voire de 20 cm.

On utilise fréquemment, dans le but d'obtenir de telles communications à courte portée, la technologie RFID qui consiste à téléalimenter au moyen d'un lecteur un circuit électronique (porté par exemple par une étiquette, ou *"tag",* mais éventuellement aussi par tout autre objet comme par exemple un téléphone portable) qui peut dès lors communiquer avec le lecteur et lui transmettre des données destinées notamment (dans les utilisations les plus classiques de cette technologie) à identifier le produit ou la personne porteur ou porteuse de l'étiquette.

La limitation de l'interaction entre le lecteur et le circuit électronique au champ proche (en pratique magnétique) généré par le lecteur, qui pouvait au départ sembler problématique, apparaît au contraire comme un avantage de cette technologie puisque la communication est initiée du fait du rapprochement du circuit électronique et du lecteur et découle donc, sauf exception, d'un acte volontaire du porteur du circuit électronique.

La demande de brevet WO 2006/115 842 décrit par exemple une utilisation de ce type.

A l'heure actuelle, chaque circuit électronique conçu pour fonctionner selon la technologie RFID est conçue dans un but (c'est-à-dire en vue d'un service) particulier et ne détient dans ce cadre que les données relatives au service concerné (par exemple le code associé au compte de l'utilisateur dans le document précité WO 2006/115 842). Dans le cas où le circuit électronique est porté par un téléphone, les données relatives au service sont ainsi par exemple mémorisées au sein d'une mémoire du téléphone. Cette solution manque toutefois de souplesse et oblige par exemple un utilisateur à obtenir par avance une pluralité d'étiquettes configurées chacune pour fonctionner avec chaque service dont il veut bénéficier. Il est en effet impossible de manière générale d'accéder aux services pour lesquels le circuit électronique n'est pas configuré.

Le document EP 1,347,623 décrit une méthode permettant la communication d'un terminal mobile avec un accessoire connecté à celui-ci.

Afin d'améliorer cet état de fait, l'invention propose un procédé d'échange de données entre une première entité électronique et une seconde entité électronique selon la revendication 1.

On prévoit ainsi lorsque cela est nécessaire la mise en place automatique (avec contrôle éventuel par l'utilisateur) d'un processus d'installation d'une application qui permettra d'accéder à des fonctionnalités associées à la seconde entité électronique (lecteur dans les exemples proposés plus loin) bien que non prévues à l'origine au sein de la première entité électronique (objet portable).

L'étape d'initiation d'une communication comprend par exemple en pratique les étapes suivantes :
- téléalimentation de la première entité électronique par la seconde entité électronique ;
- émission d'un message d'établissement de communication de la première entité électronique vers la seconde entité électronique.

Selon un premier exemple de mise en oeuvre, l'étape de vérification comprend les étapes suivantes :
- transmission de la seconde entité électronique à la première entité électronique d'une commande désignant ladite application ;
- recherche de ladite application dans ladite mémoire.

On peut également prévoir que l'étape de lancement du processus de chargement comprenne une étape de préparation par la première entité électronique d'une requête de chargement de ladite application, auquel cas la mise en oeuvre de l'étape de préparation peut éventuellement être conditionnée par la réception d'une autorisation d'un utilisateur.

La solution qui précède permet à l'utilisateur de garder le contrôle sur l'installation de l'application malgré le lancement automatique de cette installation.

Selon un mode de réalisation envisageable, ledit chargement peut être réalisé par transmission de ladite application de la seconde entité électronique vers la première entité électronique.

Cette transmission peut utiliser des moyens de communication courte portée des entités électroniques.

En variante, on pourrait toutefois prévoir que la transmission de l'application soit réalisée par communication entre des interfaces sans fil *(i.e.* sans contact) haut débit (en anglais *"high throughput wireless interfaces*") équipant respectivement les première et seconde entités électroniques, telles que des interfaces WUSB ou BLUETOOTH. Ces interfaces sont en général distinctes de l'interface courte portée, ici NFC.

L'application est ainsi échangée rapidement entre les entités électroniques.

Selon un autre mode de réalisation envisageable, ledit chargement est réalisé par connexion à un serveur distant. On peut alors prévoir une étape de réception, par la première entité électronique en provenance de la seconde entité électronique, de paramètres de connexion au serveur distant.

On peut également dans ce contexte envisager une étape de réception, par la première entité électronique en provenance de la seconde entité électronique, d'une information d'authentification destinée au serveur distant.

Selon une solution particulièrement pratique, la connexion au serveur distant peut utiliser des moyens de communication de la première entité électronique.

Selon un autre mode de mise en oeuvre, intéressante en particulier lorsque la première entité électronique ne possède pas de moyen de connexion au serveur distant, on peut prévoir une étape de connexion de la première entité électronique à un ordinateur personnel apte à réaliser la connexion au serveur distant.

L'application obtenue par le processus de chargement est par exemple utilisée au cours d'échanges entre la première entité électronique et la seconde entité électronique.

Dans ce cadre, on peut mettre en oeuvre les étapes suivantes :
- exécution de l'application par la première entité électronique afin de déterminer une réponse ;
- émission de la réponse par la première entité électronique à destination de la seconde entité électronique.

La première entité électronique est par exemple une entité électronique portable (ou de poche), tel qu'un téléphone portable ou un support d'informations portable (type *"clé USB")* et la communication une communication sans fil courte portée.

D'autres caractéristiques et avantages de l'invention apparaîtront mieux à la lumière de la description qui suit, faite en référence aux dessins annexés dans lesquels :
- la figure 1 représente un contexte possible pour la mise en oeuvre de l'invention ;
- la figure 2 représente le déroulement d'échanges entre les dispositifs de la figure 1 selon un premier exemple de mise en oeuvre de l'invention ;
- la figure 3 représente le déroulement de tels échanges dans un second exemple de mise en oeuvre de l'invention ;
- la figure 4 représente le déroulement de tels échanges dans un troisième mode de mise en oeuvre de l'invention ;
- la figure 5 représente un autre contexte envisageable pour la mise en oeuvre de l'invention ;
- la figure 6 représente un exemple de procédé mis en oeuvre dans le contexte de la figure 5.

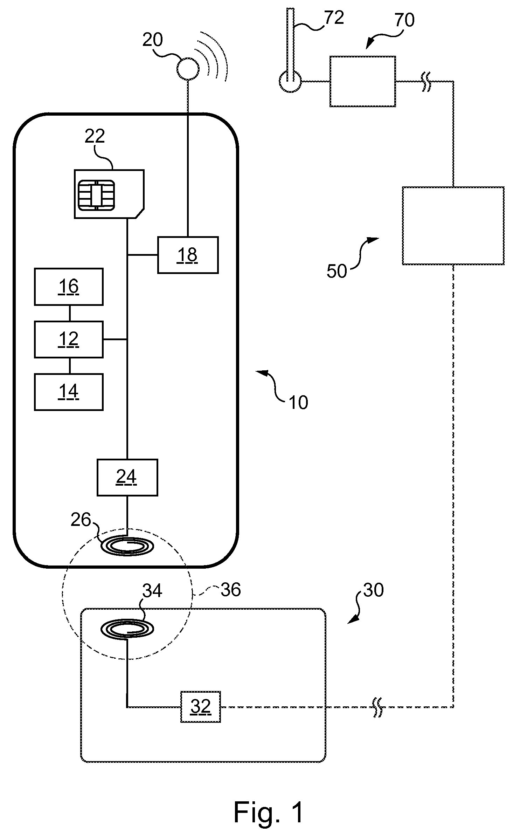

La figure 1 représente un exemple de contexte dans lequel l'invention peut être mise en oeuvre.

Un tel contexte comprend notamment un objet portable 10 (ici un téléphone portable) et un lecteur 30.

Le téléphone portable 10 et le lecteur 30 peuvent échanger des données à travers des moyens de communication courte portée (par exemple de type NFC).

Ces moyens de communication courte portée comprennent notamment un module NFC 24 coopérant (par exemple à travers un bus) avec un microprocesseur 12 du téléphone portable et relié à une antenne NFC 26 également portée par le téléphone portable 10.

Le lecteur 30 comprend également une antenne 34 parcourue par un courant sous la commande d'un module de commande 32 de manière à générer un champ magnétique 36 permettant d'alimenter et de communiquer avec des objets situés à proximité du lecteur 30 (en général sur une zone s'étendant à moins d'un mètre du lecteur, par exemple à moins d'environ 20 cm de celui-ci, la portée étant en pratique de 1 cm à 10 cm avec les technologies couramment utilisées aujourd'hui).

Comme déjà indiqué, le téléphone portable 10 comprend un microprocesseur 12 apte à gérer les différentes fonctions du téléphone portable 10, notamment l'interface avec l'utilisateur du téléphone portable 10 (au moyen par exemple d'un clavier et d'un écran non représentés). Dans ce but notamment, une mémoire morte 16 et une mémoire vive 14 sont associées au microprocesseur 12.

La mémoire morte 16 mémorise notamment des séquences d'instructions destinées à être exécutées par le microprocesseur 12 afin de mettre en oeuvre des procédés au sein du téléphone portable 10, notamment les procédés proposés par l'invention et décrits ci-après.

La mémoire vive 14 permet de mémoriser des paramètres ou instructions nécessaires au déroulement des procédés susmentionnés.

On remarque en outre que l'on peut prévoir, en plus ou en remplacement de l'une des mémoires 14, 16, une mémoire non volatile réinscriptible afin de mémoriser certaines des données ou instructions mentionnées ci-dessus.

Le téléphone portable 10 comprend également un module de lecture de carte à microcircuit recevant (de manière amovible) une carte à microcircuit, l'ensemble formé par ces deux éléments étant représentés de manière schématique en figure 1 sous la référence 22. Le module de lecture de carte 22 est relié au microprocesseur 12, par exemple par l'intermédiaire du bus déjà mentionné.

Le téléphone portable 10 comprend enfin un module de télécommunications cellulaires 18 apte à échanger des données (pouvant représenter par exemple la voie d'un interlocuteur, mais pouvant également être des données ou instructions à destination par exemple du microprocesseur 12) avec une station de base 70 d'un réseau de téléphonie cellulaire (à travers notamment une antenne équipant le téléphone portable 10 et une antenne 72 de la station de base).

Un serveur 50 mémorise notamment des applications destinées au téléphone portable 10 dans le cadre de ses échanges avec le lecteur 30 comme il sera expliqué dans la suite. Selon le mode de réalisation considéré, ce serveur 50 est relié (par exemple au moyen de connexions filaires, éventuellement à travers le réseau Internet) au lecteur 30 ou à la station de base 70 (et éventuellement en pratique à ces deux éléments).

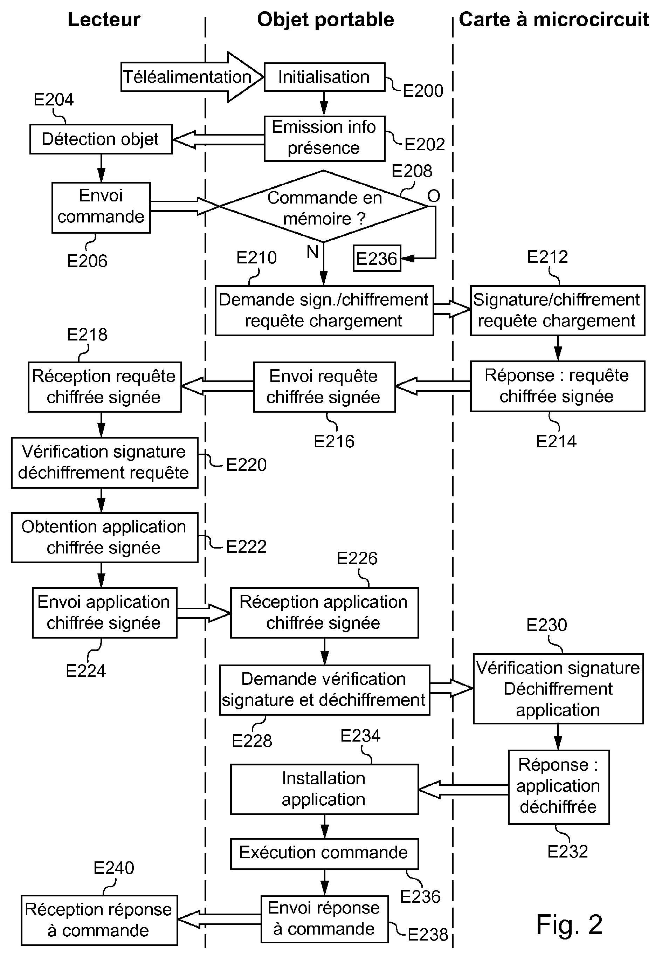

On décrit à présent en référence à la figure 2 un premier exemple d'un procédé d'échanges de données entre les différents éléments décrits ci-dessus conforme aux enseignements de l'invention.

Ce procédé est mis en oeuvre suite au rapprochement de l'objet portable 10 (comme déjà indiqué, ici un téléphone portable) du lecteur 30 (ici à moins de 20 cm comme déjà indiqué), ce qui correspond normalement à un souhait de la part de l'utilisateur du téléphone portable 10 d'utiliser des fonctionnalités associées à ce lecteur 30.

Du fait du rapprochement du téléphone 10 et du lecteur 30, le téléphone 10 (et en particulier son antenne NFC 26) entre dans le champ magnétique 36 généré par le lecteur 30, ce qui provoque la télé-alimentation du module 24 et par conséquent son initialisation à l'étape E200.

On remarque qu'en variante, le module NFC 24 équipant le téléphone portable 10 peut être alimenté par le téléphone portable 10 (auquel cas on ne profite pas de la télé-alimentation par le lecteur 30) mais être réinitialisé (étape E200) dès que l'antenne 26 entre dans le champ électromagnétique 26 du lecteur 30.

Le module NFC 24 initie alors une communication avec le lecteur 30, par exemple en émettant à l'étape E202 une information indiquant sa présence dans le champ 36 du lecteur 30. On peut prévoir par exemple que la communication s'initie conformément à ce qui décrit la norme ISO 14443.

Le lecteur 30 détecte ainsi à l'étape E204 l'objet (ici téléphone) portable 10 et émet par conséquent une commande à destination de celui-ci à l'étape E206. La commande est un élément de la mise en oeuvre de la fonctionnalité recherchée par l'utilisateur lorsqu'il approche le téléphone 10 du lecteur 30 comme mentionné ci-dessus. Il s'agit par exemple d'une commande APDU selon la norme ISO7816. En variante, la commande peut ne pas participer en elle-même à la fonctionnalité recherchée mais comprendre en tant que paramètre l'application associée à la fonctionnalité recherchée.

Le téléphone reçoit la commande à travers la liaison NFC : la commande transite à travers le module NFC 24 et atteint le microprocesseur 12 destinataire de celle-ci.

Le microprocesseur 12 vérifie alors à l'étape E208 si le code (par exemple exécutable ou interprétable, c'est-à-dire l'application) permettant la mise en oeuvre de cette commande (ou une partie de cette commande, par exemple un sous-programme) est mémorisé dans l'une des mémoires 14, 16 (ou éventuellement dans une mémoire de la carte à microcircuit 22). Le code (c'est-à-dire l'application) est une suite d'une pluralité d'instructions indépendantes (au mois trois en pratique), mémorisée par exemple sous forme exécutable ou interprétable, voir sous forme de programme source à compiler ; il s'agit par exemple d'applications formulées en langage Javacard, Javascript, Java, assembleur, C++.

Cette vérification est par exemple réalisée par consultation d'une table qui contient, pour chaque commande envisageable, un indicateur de la présence de l'application associé à cette commande dans la mémoire du téléphone portable 10 et, en cas de présence de cette application, son adresse de mémorisation.

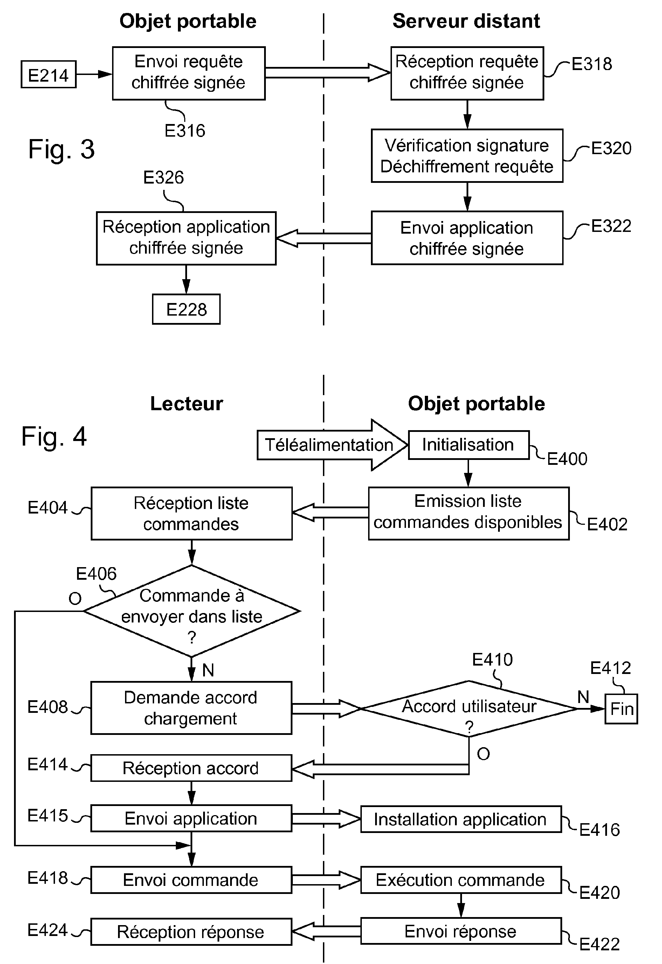

Il est également possible de prévoir de stocker dans cette même table, cette fois en cas d'absence de l'application dans la mémoire, des données utiles pour l'obtention de l'application selon les modes de réalisation décrits ci-après (et à ce titre par exemple l'information que l'application doit être obtenue du lecteur 30 lui-même comme prévu dans le présent mode de réalisation, ou les coordonnées du serveur 50 - par exemple un numéro utilisable par le système de téléphonie cellulaire ou une adresse http - en vue d'un téléchargement comme prévu dans le second mode de réalisation décrit plus loin en référence à la figure 3).

Dans l'affirmative, le microprocesseur exécute l'application afin de mettre en oeuvre la commande comme décrit plus loin à l'étape E236.

Dans la négative, le microprocesseur 12 prépare une requête de chargement de l'application, et demande tout d'abord, pour ce faire, au module de carte à microcircuit 22 la signature et le chiffrement de cette requête de chargement (étape E210).

La requête en chargement contient par exemple un descriptif de la commande (tel qu'un numéro de commande) et éventuellement des paramètres tels des éléments descriptifs des caractéristiques techniques du téléphone portable 10, ainsi qu'éventuellement l'adresse http du serveur 50.

Comme déjà indiqué, la requête de chargement est transmise à la carte microcircuit 22 pour signature et chiffrement (étape E212) à l'aide d'une clé mémorisée au sein de la carte à microcircuit et la carte à microcircuit 22 renvoie par conséquent au microprocesseur 12 la requête chiffrée et signée (étape E214).

On peut prévoir que l'émission de la requête et/ou le chiffrement soit conditionnée par la vérification (ici par la carte 22) de la présence d'un droit par la carte à microcircuit 22 et/ou par une autorisation (avec authentification éventuelle) de l'utilisateur du téléphone portable 10, par exemple par sélection d'un item au sein d'un menu ou enfoncement d'une touche particulière, ou par saisie et vérification d'un code personnel (de type PIN, notation abrégée couramment utilisée de "*Personai Identification Number*").

En variante, une telle autorisation peut être demandée à l'utilisateur au moment du chargement ou de l'installation de l'application.

On peut prévoir par ailleurs en variante que les opérations de chiffrement et/ou d'authentification de l'utilisateur soit réalisées par le téléphone portable 10 (en lieu et place de la carte à microcircuit 22).

La requête chiffrée et signée peut alors être transmise à travers la liaison NFC (c'est-à-dire en pratique à travers le module NFC 24) au lecteur 30, qui reçoit ainsi à l'étape E218 la requête chiffrée et signée.

Le lecteur 30 et principalement son module de commande 32 peuvent ainsi vérifier la signature afin de s'assurer de l'identité de l'objet 10 (ou de la carte à microcircuit 22 ou du porteur de l'objet, et ainsi vérifier éventuellement une autorisation de celui-ci à recevoir l'application) et déchiffrer la requête, par exemple au moyen d'une clé associée à la clé privée mémorisée dans la carte à microcircuit 22 de l'objet portable 10.

Après ces opérations, le module de commande 32 du lecteur 30 peut procéder au traitement de la requête déchiffrée et obtient pour ce faire une copie de l'application à transmettre, par exemple par lecture d'un dispositif de mémorisation associé au lecteur 30 (tel qu'un disque dur connecté en local ou intégré au lecteur 30) ou au moyen d'une connexion au serveur 50 déjà mentionné et détenant l'application (auquel cas la connexion entre le lecteur 30 et le serveur 50 sera de préférence sécurisée, en particulier si la liaison lecteur 30-serveur 50 utilise au moins en partie un réseau public tel que le réseau Internet). On remarque que l'on peut envisager en variante dans ce dernier cas que la requête chiffrée et signée soit directement envoyée par le lecteur 30 au serveur 50 et que la vérification de la signature et le déchiffrement soit effectués par le serveur 50.

La copie de l'application obtenue par le lecteur 30 à l'étape E222 est par ailleurs dans le mode de réalisation décrit ici une version chiffrée et signée, par exemple par une clé privée détenue par l'éditeur de l'application.

L'application chiffrée et signée est envoyée à l'étape E224 du lecteur 30 au téléphone portable 10 à travers la liaison NFC et le microprocesseur 12 reçoit donc à l'étape E226 l'application chiffrée et signée à travers le module NFC 24. Comme déjà indiqué, on pourrait prévoir en variante que l'application soit échangée à travers d'autres interfaces du téléphone 10 et du lecteur 30, par exemple des interfaces sans fil haut débit.

Le microprocesseur 12 envoie alors à l'étape E228 la version de l'application reçue au module de carte à microcircuit 22 en vue d'une vérification de la signature et d'un déchiffrement de la version reçue.

Le module de carte à microcircuit 22 procède à l'étape E230 alors à une vérification de la signature (au moyen de la clé publique associée à la clé privée de l'éditeur de l'application et déchiffre la version de l'application reçue du lecteur 30 au moyen d'une clé secrète, les clés précitées étant par exemple obtenues par la carte à microcircuit 22 par connexion à un serveur, par exemple par l'intermédiaire du réseau Internet et mémorisées dans une mémoire, par exemple non volatile, de la carte à microcircuit 22 ou du téléphone portable 10).

Le module de carte à microcircuit 22 renvoie à l'étape E232 l'application déchiffrée (pour le cas naturellement où la signature a bien été vérifiée ; dans la négative, on ne souhaite pas mettre en oeuvre l'application reçue).

Le microprocesseur 12 reçoit ainsi l'application du module de carte à microcircuit 22 et la mémorise en mémoire vive 14 (ou en variante au sein de la carte à microcircuit 22), ce qui permet, avec éventuellement d'autres opérations associées, son installation à l'étape E234.

On peut prévoir en variante d'installer (et donc notamment de mémoriser) l'application dans une mémoire non volatile du téléphone portable. On peut tenir dans ce cas, par exemple au sein du téléphone, une liste des applications ainsi installées avec la date de dernière utilisation de chacune, afin par exemple d'effacer l'application la plus anciennement utilisée lorsque l'espace mémoire alloué est plein et qu'une nouvelle installation est souhaitée.

Le microprocesseur 12 peut ainsi exécuter à l'étape E236 la commande requise par le lecteur 30 par la mise en oeuvre de l'application qui vient d'être reçue selon le processus décrit ci-dessus (réponse "*non*" à l'étape E208) ou déjà mémorisée dans le téléphone portable 10 (réponse "*oui*" à l'étape E208).

Comme déjà indiqué, la commande (ou, selon la variante déjà envisagée plus haut, l'application désignée en tant que paramètre dans la commande) fait partie de la mise en oeuvre d'une fonctionnalité souhaitée par l'utilisateur du téléphone portable et définit par exemple dans ce cadre un certain protocole d'échange entre le lecteur 30 et le téléphone portable 10.

Dans ce contexte, le téléphone portable 10 renvoie une réponse découlant de la mise en oeuvre de la commande (ou de l'application désignée par celle-ci) à destination du lecteur 30 (étape E238), réponse que le lecteur reçoit à l'étape E240.

On décrit à présent en référence à la figure 3 un second exemple d'échange de données entre les dispositifs de la figure 1 selon les enseignements de l'invention.

Ce second exemple est une variante de mise du premier exemple qui vient d'être décrit en référence à la figure 2 et leurs parties communes correspondant aux étapes E200 à E214 et E228 à E240 ne seront donc pas décrites à nouveau.

Selon ce second exemple, lorsque la communication a été initiée entre le téléphone portable 10 et le lecteur 30 et que le téléphone portable 10 a déterminé qu'il ne détenait pas le code (c'est-à-dire l'application) nécessaire à la mise en oeuvre d'une commande demandée par le lecteur 30 et qu'un processus de chargement de cette application dans le téléphone portable est requis (ce conformément aux étapes E200 à E214 précédemment décrites), le téléphone portable 10 envoie une requête chiffrée et signée (préparée selon les étapes E210 à E214 décrites précédemment) au serveur 50 par l'intermédiaire du réseau de téléphonie cellulaire (comprenant notamment la station de base 70) et sur lequel le téléphone portable 10 peut émettre des données (et notamment la requête chiffrée et signée précitée) grâce notamment à son module de télécommunication cellulaire 18.

La communication entre le téléphone portable 10 (et précisément le module de télécommunication 18) et le serveur distant 50 utilisent par exemple une liaison de type GPRS notamment entre le téléphone portable 10 et la station de base 70 et éventuellement en partie le réseau Internet entre la station de base 70 et le serveur distant 50 (en général à travers une passerelle permettant à la station de base 70 d'accéder au réseau Internet). En variante, les données pourraient être transmises entre le téléphone portable 10 et la station de base 70 à travers un réseau informatique sans fil (par exemple de type Wifi).

On remarque que les données (ou paramètres) nécessaires à la connexion au serveur distant 50 sont par exemple mémorisées dans une table comme déjà indiqué. En variante, ces données pourraient être transmises par le lecteur 30 lors d'échanges préalables entre le lecteur 30 et le téléphone portable 10, par exemple sur requête du téléphone portable 10 lorsqu'il a déterminé que la commande n'était pas en mémoire.

Le serveur 50 reçoit à l'étape E318 la requête chiffrée et signée et procède à l'étape E320 à la vérification de cette signature et au déchiffrement de la requête, selon des procédés analogues à ceux de l'étape E220 dans le premier mode réalisation décrit en référence à la figure 2.

Une fois la requête déchiffrée, le serveur 50 peut la traiter et y répondre en envoyant l'application demandée, de préférence sous forme chiffrée et signée, par exemple à travers le canal de communication déjà utilisé pour la transmission de la requête, à savoir ici à travers la station de base 70 et le système de téléphonie cellulaire associé au module de communication 18.

Le téléphone portable 10 reçoit ainsi à l'étape E326 l'application chiffrée et signée de telle sorte que le processus peut se poursuivre de manière identique à ce qui a déjà été décrit pour le premier mode de réalisation en référence aux étapes E228 à E240. On remarque ici que l'on peut prévoir que, pendant le processus d'échanges avec le serveur 50 qui vient d'être décrit, le téléphone portable 10 envoie des messages d'attente (incluant éventuellement un état d'avancement du processus d'obtention de l'application) au lecteur 30 (éventuellement en réponse à des sollicitations du lecteur 30).

La figure 3 représente un troisième exemple de procédé d'échange de données entre les éléments de la figure 1.

Comme dans les exemples précédents, la communication entre l'objet portable 10 et le lecteur 30 est engagée du fait de la téléalimentation des moyens de communication courte portée de l'objet portable 10 du fait du rapprochement de ce dernier du lecteur 30, ce qui entraîne une initialisation de la communication entre l'objet portable 10 et le lecteur 30 à l'étape E400.

Dans l'exemple décrit ici, l'objet portable émet alors à travers ces moyens de communication courte portée une liste des commandes disponibles au sein de l'objet portable (étape E402). On remarque que l'objet portable 10 émet ici la liste de commandes disponibles sans aucune sollicitation du lecteur 30.

En variante, la liste de commandes disponibles dans l'objet portable 10 pourrait être émise à destination du lecteur 30 seulement sur requête du lecteur 30, par exemple par émission par le lecteur 30 d'une requête demandant une communication de cette liste ou lorsque l'objet portable 10 reçoit toute commande de la part du lecteur 30.

Le lecteur 30 reçoit à l'étape E404 la liste des commandes ou applications disponibles dans l'objet portable 10.

Le lecteur 30 peut alors déterminer par lui-même si une commande ou application destinée à l'objet portable 10 est contenue dans cette liste des commandes disponibles (étape E406), ou si une application nécessaire à l'exécution de la commande est contenue dans cette liste.

Dans l'affirmative, le lecteur 30 pourra envoyer la commande à l'objet portable 10 (étape E418 décrite ci-après).

Dans la négative, le chargement dans l'objet portable 10 de l'application correspondant à la commande souhaitée par le lecteur 30 constitue un préalable à l'envoi de cette commande et le lecteur 30 lance un processus de chargement de l'application comme décrit ci-après à partir de l'étape E408.

On remarque que selon une variante envisageable, la détermination de la disponibilité de la commande dans l'objet portable 10 aurait pu être réalisée par l'émission d'une requête à destination de l'objet portable, la vérification de la présence de l'application associée dans l'objet portable 10 comme dans les précédents modes de réalisation et l'envoi par l'objet portable 10 à destination du lecteur 30 d'une information indiquant la disponibilité ou non de la commande au sein de l'objet portable 10.

Comme déjà indiqué, lorsqu'il est déterminé que le chargement de l'application associée à une commande est nécessaire avant la mise en oeuvre de celle-ci, on procède à l'étape E408 à laquelle le lecteur 30 envoie dans le présent mode de réalisation une demande d'accord d'un tel chargement à l'objet portable 10.

L'objet portable 10 reçoit cette demande d'accord et requiert par exemple l'accord de l'utilisateur (typiquement par affichage d'un message correspondant à l'attention de l'utilisateur et attente d'une réponse de celui-ci au moyen d'un clavier de l'objet portable 10) comme indiqué à l'étape E410.

Si l'utilisateur refuse le chargement (réponse "*non*" à l'étape E410), on met par exemple fin au processus de communication entre le lecteur 30 et l'objet portable 10 puisqu'une commande de l'un à l'autre ne pourra être exécutée (étape E412).

En revanche, si l'utilisateur accepte le chargement (réponse "*oui*" à l'étape E410), par exemple par sélection d'une touche physique ou virtuelle (menu) prédéterminée et/ou par saisie d'un code personnel par l'utilisateur, l'objet portable 10 retourne au lecteur 30 une information indiquant cet accord (étape E414).

On remarque que l'accord demandé à l'utilisateur tel que décrit ci-dessus est un mode possible de réalisation mais que d'autres variantes pourraient être envisagées : l'accord de l'objet portable 10 pourrait notamment être déterminé en fonction d'un paramètre mémorisé dans l'objet portable 10 et indiquant que de tels chargements sont autorisés.

On peut prévoir en variante que l'accord de l'utilisateur soit demandé avant l'installation de l'application, c'est-à-dire immédiatement après l'étape E416 décrite ci-dessous.

Après réception de l'accord pour le chargement à l'étape E414, le lecteur 30 procède à l'envoi de l'application associée à la commande à l'étape E415, application que le lecteur 30 détient au préalable par exemple dans un disque dur local (ou tout autre moyen de stockage, telle que par exemple une mémoire) ou obtient par connexion (éventuellement sécurisée) au serveur distant 50, comme déjà indiqué à propos du premier mode de réalisation.

L'application est alors reçue à l'étape E416 par l'objet portable 10 et installée au sein de celui-ci (c'est-à-dire principalement mémorisée au sein d'une mémoire, typiquement la mémoire 14, de l'objet portable 10).

Une fois l'application envoyée à l'étape E415, et éventuellement après une temporisation (ou en variante à réception d'une confirmation par l'objet 10 de l'installation de l'application), le lecteur peut procéder à l'envoi de la commande souhaitée à l'étape E418.

L'objet portable 10 reçoit la commande à l'étape E420 et exécute celle-ci en utilisant l'application qu'il détient en mémoire (éventuellement du fait de son chargement à l'étape E415 comme décrit ci-dessus).

Le résultat produit par la mise en oeuvre de cette application est envoyé à l'étape E422 sous forme de réponse au lecteur 30, qui reçoit cette information à l'étape E424.

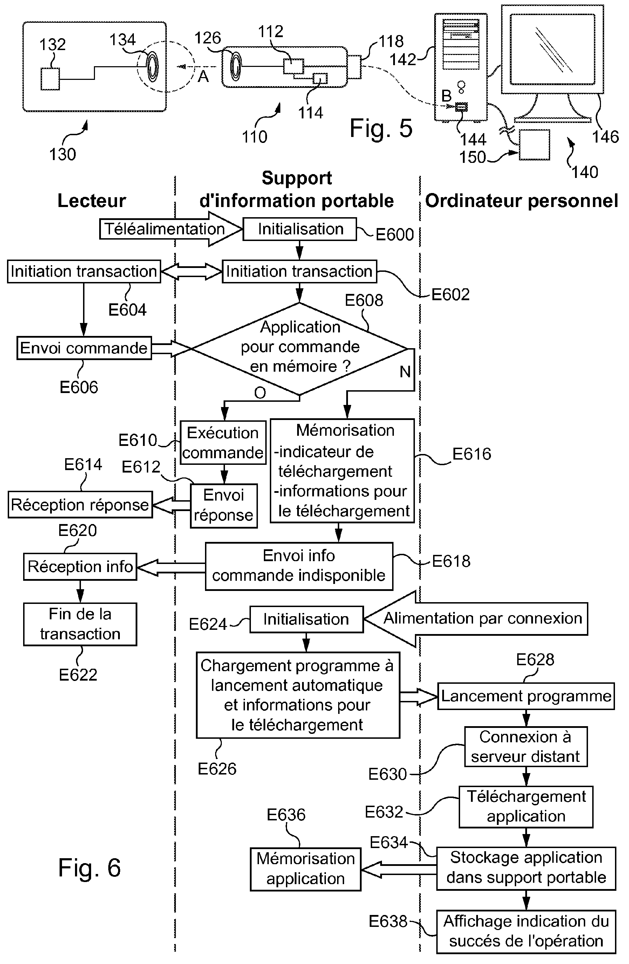

On décrit à présent un autre contexte de mise en oeuvre possible pour l'invention en référence à la figure 5.

On prévoit également dans cet autre contexte un lecteur 130 comprenant un processeur 132 et des moyens de communication courte portée (par exemple de type NFC) 134.

On utilise également un objet portable 110, ici un support d'informations portable, par exemple du type clé USB (de l'anglais "*Universal Serial Bus*") comprenant un microprocesseur 112 auquel est associée une mémoire 114 (par exemple de type EEPROM ou Flash), ainsi que des moyens de communication courte portée 126 (ici également de type NFC) et des moyens d'interface 118 (ici représentés par un simple connecteur mâle de ces moyens d'interface par souci de simplification) aptes à établir une communication entre le microprocesseur 112 et une entité électronique extérieure conçue pour recevoir le connecteur précité, cette entité électronique étant typiquement un ordinateur personnel (ou PC selon la dénomination anglo-saxonne), comme cela sera d'ailleurs le cas dans l'exemple décrit ci-après.

L'exemple décrit ci-après utilise en effet en outre un ordinateur personnel 140 formé notamment d'une unité centrale 142 (qui abrite notamment un microprocesseur de l'ordinateur personnel) munie d'un connecteur femelle 144 (ici de type USB) apte à recevoir le connecteur mâle des moyens d'interface 118 de l'objet portable 110. On remarque que l'on décrit ici le cas d'une connexion par contact physique entre l'objet portable 110 et l'ordinateur personnel 140 mais que l'on pourrait prévoir en variante une connexion sans fil.

L'ordinateur personnel 140 comprend également un écran 146 permettant un affichage sous le contrôle de l'unité centrale 142.

L'ordinateur personnel 140 dispose enfin de moyens de connexion à un réseau, ici le réseau Internet, qui lui permettent d'échanger des données notamment avec un serveur distant 150 au sein duquel sont notamment mémorisées des applications utiles à la mise en oeuvre de commandes du protocole d'échange entre le lecteur 130 et l'objet portable 110 à travers les moyens de communication courte portée.

La figure 6 présente un exemple de procédé mis en oeuvre dans le contexte de la figure 5 conformément aux enseignements de l'invention.

Lorsqu'un utilisateur approche l'objet portable 110 (ici une clé USB) du lecteur 130 (flèche A en figure 5), les moyens de communication courte portée 126 de l'objet portable 110 entrent dans le champ du lecteur et permettent la téléalimentation de la clé USB 110, ce qui entraîne notamment son initialisation à l'étape E600.

Une transaction entre l'objet portable 110 et le lecteur 130 est alors initiée (étape E604 au sein du lecteur et étape E602 au sein de l'objet portable 110).

Une fois la communication établie (et éventuellement après des échanges préalables entre le lecteur 130 et l'objet portable 110), le lecteur 130 envoie une commande à l'objet portable 110 (étape E606).

L'objet portable 110 reçoit cette commande et vérifie à l'étape E608 s'il détient dans la mémoire 114 une application permettant la mise en oeuvre cette commande (étape E608). Selon une variante déjà mentionnée à propos du premier mode de réalisation, la commande peut inclure en tant que paramètre une information désignant l'application recherchée.

Dans l'affirmative, la commande est exécutée à l'étape E610 et une réponse résultant de cette commande est par exemple envoyée à l'étape E612 de l'objet portable 110 au lecteur 130, qui la reçoit à l'étape E614.

Dans la négative à l'étape E608, le microprocesseur 112 de l'objet portable 110 commande (étape E616) la mémorisation dans la mémoire 114 d'une part d'un indicateur de la nécessité de télécharger l'application manquante et d'autre part d'informations utiles pour ce téléchargement, à savoir par exemple l'adresse de connexion à un serveur distant détenant cette application, une information désignant la commande et/ou l'application, et une information d'authentification.

Ces informations ont par exemple été communiquées par le lecteur 130 à l'objet portable 110 en même temps que la commande à l'étape E606 décrite ci-dessus. L'information d'authentification est par exemple générée par le lecteur 130, éventuellement à partir d'une clé cryptographique mémorisée dans le processeur 132 (ou une mémoire associée) et par des moyens cryptographiques associés au processeur 132.

L'objet portable 110 envoie par ailleurs à l'étape E618 une information indiquant que la commande est indisponible à destination du lecteur 130, qui reçoit cette information à l'étape E620 et met par conséquent fin à la transaction à l'étape E622.

L'utilisateur, qui constate que la transaction ne s'est pas correctement terminée (par exemple parce que la fonctionnalité recherchée en approchant l'objet portable 110 du lecteur 130 n'a pas été mise en oeuvre, ou en variante grâce à l'affichage d'une indication que la transaction ne s'est pas correctement terminée au niveau du lecteur 130 lorsque celui-ci reçoit l'information d'indisponibilité de la commande à l'étape E620), connecte l'objet portable 110 à l'unité centrale 142 de l'ordinateur personnel 140 par introduction du connecteur mâle 118 dans le connecteur femelle 144 (flèche A), ce qui provoque l'alimentation de l'objet portable 110 et son initialisation à l'étape E624.

La mémoire 114 de l'objet portable 110 comprend un programme à chargement et lancement automatique. A la connexion de l'objet portable 110 à l'unité centrale 142, ce programme est transféré à l'étape E626 vers l'unité centrale 142 et exécuté par celle-ci à l'étape E628.

Ce programme fait appel aux informations utiles au téléchargement mentionnées ci-dessus, soit du fait que ces informations sont chargées dans l'unité centrale 142 en même temps que le programme lui-même, soit par lecture depuis l'unité centrale 142 dans la mémoire 114 de l'objet portable 110, afin d'établir une connexion avec le serveur distant 150 identifié dans ces informations de téléchargement (étape E630).

L'unité centrale 142 transmet alors le cas échéant au serveur distant 150 les informations désignant la commande et/ou le programme ainsi que l'information d'authentification, afin que le serveur distant 150 puisse déterminer quelle application il doit émettre et vérifier au moyen de l'information d'authentification qu'il est autorisé à l'émettre.

Si le téléchargement est autorisé par le serveur distant 150, l'unité centrale télécharge l'application à l'étape E632 et commande sa mémorisation dans la mémoire 114 de l'objet portable 110 (étape E634).

L'ordinateur personnel peut alors par exemple afficher une indication du succès de l'opération de téléchargement au moyen de l'écran 146 à l'étape E638.

L'objet portable 110 mémorise ainsi à l'étape E636 l'application utile à la mise en oeuvre de la commande demandée à l'étape E606.

L'utilisateur peut alors approcher l'objet portable 110 du lecteur 130 (ou d'un autre lecteur du même type), ce qui initiera un procédé identique à celui déjà décrit (à partir de l'étape E600), à la différence près que la vérification de l'étape E608 sera positive et entraînera par conséquent l'exécution de la commande à l'étape E610 et l'envoi d'une réponse à l'étape E612 comme déjà décrit.

Les exemples qui précèdent ne sont que des modes possibles de mise en oeuvre de l'invention qui ne s'y limite pas. Notamment, on pourrait envisager en variante que le téléphone portable équipé du module NFC fonctionne en tant que lecteur. Par ailleurs, les caractéristiques et variantes des différents modes de réalisation présentés ci-dessus pourraient être combinées.

## Revendications

1. Procédé d'échange de données entre une première entité électronique (10 ; 110) et une seconde entité électronique (30 ; 130), **caractérisé par** les étapes suivantes :
- initiation d'une communication sans fil courte portée entre la première entité électronique (10; 110) et la seconde entité électronique (30; 130) subséquemment à un rapprochement des première et seconde entités électroniques (10, 30 ; 110, 130) ;
- en conséquence de ladite initiation, obtention, par ladite première entité électronique, d'une commande émise par la seconde entité électronique ;
- en conséquence de ladite obtention, vérification (E208 ; E608) par la première entité électronique, de la présence dans une mémoire de la première entité électronique (10 ; 110) d'une application relative à la seconde entité électronique (30 ; 130), ladite application étant nécessaire à l'exécution dans la première entité électronique, de la commande reçue de la seconde entité électronique ;
- en cas de vérification négative, lancement d'un processus de chargement de ladite application dans la première entité électronique,
- exécution de ladite commande par l'application chargée.

2. Procédé d'échange de données selon la revendication 1, dans lequel l'étape d'initiation d'une communication comprend les étapes suivantes :
- téléalimentation de la première entité électronique (10 ; 110) par la seconde entité électronique (30 ; 130) ;
- émission d'un message d'établissement de communication de la première entité électronique (10 ; 110) vers la seconde entité électronique (30 ; 130).

3. Procédé d'échange de données selon la revendication 1 ou 2, dans lequel l'étape de vérification comprend les étapes suivantes :
- transmission (E206 ; E606) de la seconde entité électronique (30 ; 130) à la première entité électronique (10 ; 110) d'une commande désignant ladite application ;
- recherche (E208 ; E608) de ladite application dans ladite mémoire.

4. Procédé d'échange de données selon l'une des revendications 1 à 3, dans lequel l'étape de lancement du processus de chargement comprend une étape de préparation par la première entité électronique d'une requête de chargement de ladite application.

5. Procédé d'échange de données selon la revendication 4, dans lequel la mise en oeuvre de l'étape de préparation est conditionnée par la réception d'une autorisation d'un utilisateur.

6. Procédé d'échange de données selon l'une des revendications 1 à 5, dans lequel ledit chargement est réalisé par transmission (E224, E226) de ladite application de la seconde entité électronique (30) vers la première entité électronique (10).

7. Procédé d'échange de données selon l'une des revendications 1 à 6, dans lequel ledit chargement est réalisé par connexion (E316 ; E630) à un serveur distant (50 ; 150).

8. Procédé d'échange de données selon la revendication 7, comprenant une étape de réception, par la première entité électronique en provenance de la seconde entité électronique, de paramètres de connexion au serveur distant.

9. Procédé d'échange de données selon la revendication 7 ou 8, comprenant une étape de réception, par la première entité électronique en provenance de la seconde entité électronique, d'une information d'authentification destinée au serveur distant.

10. Procédé d'échange de données selon l'une des revendications 7 à 9, dans lequel la connexion (E316) au serveur distant utilise des moyens de communication (18,20) de la première entité électronique (10).

11. Procédé d'échange de données selon l'une des revendications 7 à 9, comprenant une étape de connexion de la première entité électronique (110) à un ordinateur personnel (140) apte à réaliser la connexion au serveur distant (150).

12. Procédé d'échange de données selon l'une des revendications 1 à 11, comprenant les étapes suivantes :
- exécution (E236 ; E610) de l'application par la première entité électronique (10 ; 110) afin de déterminer une réponse ;
- émission (E238 ; E612) de la réponse par la première entité électronique (10 ; 110) à destination de la seconde entité électronique (30 ; 130).

13. Procédé d'échange de données selon l'une des revendications 1 à 12, dans lequel la première entité électronique est une entité électronique portable.

14. Procédé d'échange de données selon la revendication 4, dans lequel la requête de chargement est une requête signée et chiffrée, obtenue par signature et chiffrement au moyen d'une carte à microcircuit reçue dans la première entité électronique.

## Patentansprüche

1. Verfahren zum Datenaustausch zwischen einer ersten elektronischen Einheit (10; 110) und einer zweiten elektronischen Einheit (30; 130), **gekennzeichnet durch** die folgenden Schritte:
- Initiierung einer drahtlosen Kurzstrecken-Kommunikation zwischen der ersten elektronischen Einheit (10; 110) und der zweiten elektronischen Einheit (30; 130) anschließend an eine Annäherung der ersten und zweiten elektronischen Einheit (10, 30; 110, 130);
- als Folge der Initiierung, Erhalt, **durch** die erste elektronische Einheit, eines Befehls, der von der zweiten elektronischen Einheit ausgegeben wird;
- als Folge des Erhalts, Verifikation (E208; E608), **durch** die erste elektronische Einheit, des Vorhandenseins einer Anwendung in Bezug auf die zweite elektronische Einheit (30; 130) in einem Speicher der ersten elektronischen Einheit (10; 110), wobei die Anwendung zur Ausführung des von der zweiten elektronischen Einheit empfangenen Befehls in der ersten elektronischen Einheit notwendig ist;
- im Fall einer negativen Verifikation, Starten eines Prozesses des Ladens der Anwendung in die erste elektronische Einheit;
- Ausführung des Befehls **durch** die geladene Anwendung.

2. Verfahren zum Datenaustausch nach Anspruch 1,
wobei der Schritt der Initiierung einer Kommunikation die folgenden Schritte umfasst:
- Fernspeisung der ersten elektronischen Einheit (10; 110) durch die zweite elektronische Einheit (30; 130);
- Ausgeben einer Nachricht der Herstellung der Kommunikation der ersten elektronischen Einheit (10; 110) an die zweite elektronische Einheit (30; 130).

3. Verfahren zum Datenaustausch nach Anspruch 1 oder 2,
wobei der Schritt der Verifikation die folgenden Schritte umfasst:
- Senden (E206; E606) eines Befehls, der die Anwendung bezeichnet, von der zweiten elektronischen Einheit (30; 130) an die erste elektronische Einheit (10; 110);
- Suchen (E208; E608) der Anwendung in dem Speicher.

4. Verfahren zum Datenaustausch nach einem der Ansprüche 1 bis 3,
wobei der Schritt des Startens des Ladeprozesses einen Schritt der Vorbereitung einer Ladeanforderung der Anwendung durch die erste elektronische Einheit umfasst.

5. Verfahren zum Datenaustausch nach Anspruch 4,
wobei die Durchführung des Vorbereitungsschritts durch den Empfang einer Autorisation eines Benutzers bedingt wird.

6. Verfahren zum Datenaustausch nach einem der Ansprüche 1 bis 5,
wobei das Laden durch Senden (E224, E226) der Anwendung von der zweiten elektronischen Einheit (30) an die erste elektronische Einheit (10) durchgeführt wird.

7. Verfahren zum Datenaustausch nach einem der Ansprüche 1 bis 6,
wobei das Laden durch eine Verbindung (E316; E630) mit einem entfernten Server (50; 150) durchgeführt wird.

8. Verfahren zum Datenaustausch nach Anspruch 7,
umfassend einen Schritt des Empfangs von Verbindungsparametern mit dem entfernten Server durch die erste elektronische Einheit von der zweiten elektronischen Einheit.

9. Verfahren zum Datenaustausch nach Anspruch 7 oder 8,
umfassend einen Schritt des Empfangs einer Authentifizierungsinformation, die für den entfernten Server bestimmt ist, durch die erste elektronische Einheit von der zweiten elektronischen Einheit.

10. Verfahren zum Datenaustausch nach einem der Ansprüche 7 bis 9,
wobei die Verbindung (E316) mit dem entfernten Server Kommunikationsmittel (18, 20) der ersten elektronischen Einheit (10) verwendet.

11. Verfahren zum Datenaustausch nach einem der Ansprüche 7 bis 9,
umfassend einen Schritt der Verbindung der ersten elektronischen Einheit (110) mit einem Personalcomputer (140), der ausgelegt ist, die Verbindung mit dem entfernten Server (150) herzustellen.

12. Verfahren zum Datenaustausch nach einem der Ansprüche 1 bis 11,
umfassend die folgenden Schritte:
- Ausführung (E236; E610) der Anwendung durch die erste elektronische Einheit (10; 110), um eine Antwort zu bestimmen;
- Ausgeben (E238; E612) der Antwort durch die erste elektronische Einheit (10; 110) an die zweite elektronische Einheit (30; 130).

13. Verfahren zum Datenaustausch nach einem der Ansprüche 1 bis 12,
wobei die erste elektronische Einheit eine tragbare elektronische Einheit ist.

14. Verfahren zum Datenaustausch nach Anspruch 4, wobei die Ladeanforderung eine signierte und chiffrierte Anforderung ist, die durch Signatur und Chiffrierung mittels einer Mikroschaltkarte erhalten wird, die in der ersten elektronischen Einheit aufgenommen wird.

## Claims

1. Method of exchanging data between a first electronic entity (10; 110) and a second electronic entity (30; 130), **characterised by** the following steps:
- initiating short range wireless communication between the first electronic entity (10; 110) and the second electronic entity (30; 130) subsequently to bringing the first and second electronic entities (10, 30; 110, 130) closer together;
- in consequence of said initiation, obtaining, by said first electronic entity, a command transmitted by the second electronic entity;
- in consequence of said obtainment, verifying, by the first electronic entity (E208; E608), the presence in a memory of the first electronic entity (10; 110), of an application relating to the second electronic entity (30; 130), said application being necessary for the execution, in the first electronic entity, of the command received from the second electronic entity;
- in the case of negative verification, launching a process for loading said application into the first electronic entity,
- executing said command by the loaded application.

2. Method of exchanging data according to Claim 1, wherein said step of initiating communication comprises the following steps:
- remote power feeding of the first electronic entity (10; 110) by the second electronic entity (30; 130);
- sending a communication set-up message from the first electronic entity (10; 110) to the second electronic entity (30; 130).

3. Method of exchanging data according to Claim 1 or 2, wherein the verification step comprises the following steps:
- sending (E206; E606) from the second electronic entity (30; 130) to the first electronic entity (10; 110), a command designating said application;
- searching (E208; E608) for said application in said memory.

4. Method of exchanging data according to one of Claims 1 to 3, wherein said step of launching the loading process comprises a step of preparing, by the first electronic entity, a request for loading of said application.

5. Method of exchanging data according to Claim 4, wherein the execution of the preparation step is conditional on receiving authorization of a user.

6. Method of exchanging data according to one of Claims 1 to 5, wherein said loading is effected by sending (E224, E226) said application from the second electronic entity (30) to the first electronic entity (10).

7. Method of exchanging data according to one of Claims 1 to 6, wherein said loading is effected by connecting (E316; E630) to a remote server (50; 150).

8. Method of exchanging data according to Claim 7, comprising a step of receiving, by the first electronic entity, from the second electronic entity, parameters of connection to the remote server.

9. Method of exchanging data according to Claim 7 or 8, comprising a step of receiving, by the first electronic entity, from the second electronic entity, authentication information intended for the remote server.

10. Method of exchanging data according to one of Claims 7 to 9, wherein the connection (E316) to the remote server uses communication means (18, 20) of the first electronic entity (10).

11. Method of exchanging data according to one of Claims 7 to 9, comprising a step of connecting the first electronic entity (110) to a personal computer (140) adapted to make the connection to the remote server (150).

12. Method of exchanging data according to one of Claims 1 to 11, comprising the following steps:
- executing (E236; E610) the application by the first electronic entity (10; 110) in order to determine a response;
- sending (E238; E612) the response by the first electronic entity (10; 110) to the second electronic entity (30; 130).

13. Method of exchanging data according to one of Claims 1 to 12, wherein the first electronic entity is a portable electronic entity.

14. Method of exchanging data according to Claim 4, wherein the loading request is a signed and enciphered request obtained by signature and enciphering by means of a microchip card received in the first electronic entity.
